# EUROPEAN PATENT APPLICATION

(11) **EP 4 712 170 A1**
(43) Date of publication of application: **18.03.2026**
(21) Application number: 24809941.8
(22) Date of filing: 22.01.2024
(51) Int. Cl.: H01M 4/62, H01M 4/04, H01M 4/02, H01M 4/38

(54) **NEGATIVE ELECTRODE MATERIAL, NEGATIVE ELECTRODE SHEET AND PREPARATION METHOD THEREFOR, ENERGY STORAGE DEVICE AND ELECTRIC DEVICE**

(30) Priority: 19.05.2023 CN 202310572168
(71) Applicant: Xiamen Hithium Energy Storage Technology Co., Ltd., Xiamen, Fujian 361100 (CN)
(72) Inventor: LIN, Yingxin, Xiamen, Fujian 361100 (CN); WANG, Shiwen, Xiamen, Fujian 361100 (CN); CHEN, Qingchun, Xiamen, Fujian 361100 (CN); ZHU, Kaida, Xiamen, Fujian 361100 (CN); ZHANG, Min, Xiamen, Fujian 361100 (CN)
(74) Representative: Manitz Finsterwald Patent- und Rechtsanwaltspartnerschaft mbB
(86) International application number: PCT/CN2024/073414
(87) International publication number: WO 2024/239691

(57) **Abstract**

Provided are a negative electrode material and a preparation method therefor, a negative electrode plate and a preparation method therefor, an energy storage device, and an electricity-consumption device. The negative electrode material includes hard carbon. The hard carbon has a porous structure and satisfies: 0.32≤Dv50/1000V≤2.40. Dv50 of the hard carbon is in unit of µm; and V represents a total volume of pores in the hard carbon, in unit of cm³/g.

## Description

### FIELD

The present disclosure belongs to the field of batteries, and particularly, relates to a negative electrode material and a preparation method therefor, a negative electrode plate and a preparation method therefor, an energy storage device, and an electricity-consumption device.

### BACKGROUND

Compared with graphite negative electrodes, hard carbon has a rich disordered structure and a relatively large interlayer spacing, which can accelerate ion diffusion and is thus considered to be a very promising negative electrode material for batteries. However, hard carbon materials have low first-cycle charge and discharge efficiency, low capacity, and poor rate characteristics, which have hindered their development in the field of batteries.

### SUMMARY

The present disclosure is primarily based on the following questions and findings.

In order to improve problems such as low first-cycle charge and discharge efficiency, low capacity, and poor rate characteristics of hard carbon negative electrode active materials, various methods have been attempted to adjust the hard carbon structure. For example, a method of coating hard carbon with soft carbon is utilized to cover micropores on the hard carbon surface, thereby reducing its specific surface area and side reactions between the hard carbon and an electrolyte, and further improving the first-cycle charge and discharge efficiency of a battery. However, the method of coating hard carbon with soft carbon reduces the active sites of ions (such as sodium ions), resulting in a decrease in battery capacity. For another example, a method of doping atoms such as phosphorus, nitrogen or sulfur into hard carbon materials is utilized to improve the capacity and rate performance of hard carbon materials. However, this method reduces the first-cycle charge and discharge efficiency of the battery.

The present disclosure aims to solve one of the technical problems in the related art at least to some extent. To this end, an object of the present disclosure is to provide a negative electrode material and a preparation method therefor, a negative electrode plate and a preparation method therefor, an energy storage device, and an electricity-consumption device. The negative electrode material has a relatively high capacity and first-cycle charge and discharge efficiency, as well as excellent kinetic performance, which is conducive to balancing the energy density, rate performance, and cycle performance of the battery.

In a first aspect of the present disclosure, the present disclosure provides a negative electrode material. According to an embodiment of the present disclosure, the negative electrode material includes hard carbon. The hard carbon has a porous structure and satisfies: 0.32≤Dv50/1000V≤2.40. Dv50 of the hard carbon is in unit of µm, and V represents a total volume of pores in the hard carbon, in unit of cm³/g.

The negative electrode material according to the above embodiment of the present disclosure includes hard carbon with the porous structure. The ratio of the Dv50 of hard carbon particles and the total volume of the pores in the hard carbon is controlled within the above range to achieve matching between the particle size and the porous structure of the hard carbon material. This is not only conducive to storage of the ions (such as sodium ions) which improves the capacity of the hard carbon material, but also facilitates transmission of the ions (such as sodium ions) which accelerates ion diffusion dynamics. When the particle size and the volume of the pores of the hard carbon do not match, for example, in the case of a large particle size and a small total volume of pores of the hard carbon material, it is not conducive to the diffusion and the transmission of the ions, affecting the kinetic properties of the porous hard carbon, thereby leading to degradation in the rate performance of the battery. In the case of a small particle size and a large total volume of pores of the hard carbon material, the contact area between the porous hard carbon and the electrolyte is increased, leading to an increase in the side reactions between the hard carbon and the electrolyte, thereby affecting the first-cycle charge and discharge efficiency and the cycle performance of the battery. By controlling the Dv50 and the total volume V of the pores of the hard carbon to satisfy the above relationship, the present disclosure provides a negative electrode material with relatively high capacity and first-cycle charge and discharge efficiency, as well as excellent kinetic performance, which is conducive to balancing the energy density, the rate performance, and the cycle performance of the battery.

In a second aspect of the present disclosure, the present disclosure provides a negative electrode plate. According to an embodiment of the present disclosure, the negative electrode plate includes a negative electrode active material layer. The negative electrode active material layer includes the above negative electrode material. Therefore, the battery loaded with the negative electrode plate has an excellent energy density, rate performance, and coulombic efficiency.

In a third aspect of the present disclosure, the present disclosure provides a method for preparing the above negative electrode material. According to an embodiment of the present disclosure, the method includes:
step 1: mixing a hard carbon precursor with a pore-forming agent to obtain a dispersion of the hard carbon precursor; and
step 2: drying the dispersion of the hard carbon precursor, performing a carbonization treatment on the dried dispersion of the hard carbon precursor, followed by washing, pulverizing, and sieving, to obtain the negative electrode material.

As a result, using this method can prepare the above negative electrode material with relatively high capacity and first-cycle charge and discharge efficiency, as well as excellent kinetic performance, which is conducive to balancing the energy density, the rate performance, and the cycle performance of the battery.

In a fourth aspect of the present disclosure, the present disclosure provides a method for preparing the above negative electrode plate. According to an embodiment of the present disclosure, the method includes: applying a negative electrode active slurry onto at least one side of a current collector to obtain the negative electrode plate. The negative electrode active slurry includes the above negative electrode material or the negative electrode material obtained by the above method. This method not only has a simple preparation process conducive to industrial production but also can obtain the negative electrode plate with relatively high capacitance and first-cycle charge and discharge efficiency as well as excellent kinetic performance.

In a fifth aspect of the present disclosure, the present disclosure provides an energy storage device. According to an embodiment of the present disclosure, the energy storage device includes the above negative electrode plate. Compared with the related art, the energy storage device has better comprehensive performance and can simultaneously have relatively high energy density as well as excellent rate performance and cycle performance.

In a sixth aspect of the present disclosure, the present disclosure provides an electricity-consumption device. According to an embodiment of the present disclosure, the electricity-consumption device includes the above energy storage device. Compared with the related art, the electricity-consumption device has a relatively longe battery life and service life, and thus has a relatively high market satisfaction.

Additional aspects and advantages of the embodiments of the present disclosure will be provided at least in part in the following description, or will become apparent in part from the following description, or can be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings.

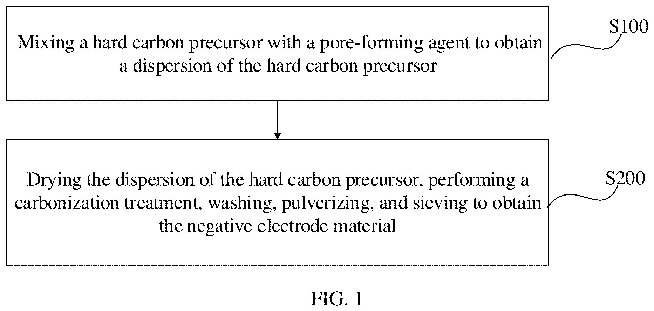

FIG. 1 is a flowchart of a method for preparing a negative electrode material according to an embodiment of the present disclosure.

### DETAILED DESCRIPTION OF THE EMBODIMENTS

The embodiments of the present disclosure will be described in detail below with reference to examples thereof as illustrated in the accompanying drawings, throughout which same or similar elements, or elements having same or similar functions, are denoted by same or similar reference numerals. The embodiments described below with reference to the drawings are illustrative only, and are intended to explain rather than limit the present disclosure.

In a first aspect of the present disclosure, the present disclosure provides a negative electrode material. According to an embodiment of the present disclosure, the negative electrode material includes hard carbon. The hard carbon has a porous structure and satisfies: 0.32≤Dv50/1000V≤2.40. Dv50 of the hard carbon is in unit of µm, and V represents a total volume of pores in the hard carbon, in unit of cm³/g.

The negative electrode material according to the above embodiment of the present disclosure includes hard carbon with the porous structure. The ratio of the Dv50 of hard carbon particles and the total volume of the pores in the hard carbon is controlled within the above range to achieve matching between the particle size and the porous structure of the hard carbon material. This is not only conducive to storage of the ions (such as sodium ions) which improves the capacity of the hard carbon material, but also facilitates transmission of the ions (such as sodium ions) which accelerates ion diffusion dynamics. When the particle size and the volume of the pores of the hard carbon do not match, for example, in the case of a large particle size and a small total volume of pores of the hard carbon material, it is not conducive to the diffusion and the transmission of the ions, affecting the kinetic properties of the porous hard carbon, thereby leading to degradation in the rate performance of the battery. In the case of a small particle size and a large total volume of pores of the hard carbon material, the contact area between the porous hard carbon and the electrolyte is increased, leading to an increase in the side reactions between the hard carbon and the electrolyte, thereby affecting the first-cycle charge and discharge efficiency and the cycle performance of the battery. By controlling the Dv50 and the total volume V of the pores of the hard carbon to satisfy the above relationship, the present disclosure provides a negative electrode material with relatively high capacity and first-cycle charge and discharge efficiency, as well as excellent kinetic performance, which is conducive to balancing the energy density, the rate performance, and the cycle performance of the battery. It should be noted that the negative electrode material in the present disclosure may include only the above hard carbon or may include other negative electrode materials, such as graphite. Based on a total mass of the negative electrode material, a mass proportion of the hard carbon in the negative electrode material may be no less than 50 wt%, such as no less than 60 wt%, no less than 70 wt%, no less than 80 wt%, no less than 85 wt%, no less than 90 wt%, or no less than 95 wt%.

According to an embodiment of the present disclosure, in the negative electrode material, the Dv50 of the hard carbon and the total volume V of the pores in the hard carbon can satisfy: 0.42≤Dv50/1000V≤1.44. For example, Dv50/1000V may be 0.6, 0.8, 1.0, 1.2, or 1.4. This is more conducive to ensuring that the negative electrode material has a relatively high capacity and first-cycle charge and discharge efficiency, and excellent kinetic performance, which can further improve the energy density, the rate performance, and the cycle performance of the battery.

According to an embodiment of the present disclosure, the Dv50 of the hard carbon may range from 5 µm to 18 µm, such as 6 µm, 8 µm, 10 µm, 13 µm, 15 µm, or 17 µm. If the Dv50 of the hard carbon is excessively small, it easily leads to an excessively large specific surface area of the hard carbon, resulting in an increase in the side reactions between the negative electrode material and the electrolyte. As a result, the irreversible capacity of the battery may be increased, affecting the first-cycle charge and discharge efficiency and the cycle performance of the battery. If the Dv50 of the hard carbon is excessively large, it easily slows down the solid-phase diffusion rate of the ions (such as sodium ions) in the hard carbon and thus increases internal resistance of the battery, affecting the rate performance of the battery. Moreover, it is not conducive to improving a compaction density of a negative electrode active material layer, affecting the energy density of the battery. In the present disclosure, controlling the Dv50 of the hard carbon within the above range is favorable for balancing the the energy density, rate performance, and cycle performance of the battery. Further, the Dv50 of the hard carbon may range from 5 µm to 14 µm, which is conducive to further improving the energy density of the battery. It should be noted that the Dv50 herein refers to a particle size corresponding to 50% cumulative volume distribution of the hard carbon.

According to the embodiments of the present disclosure, the total volume V of the pores in the hard carbon may range from 0.005 cm³/g to 0.022 cm³/g, such as 0.006 cm³/g, 0.01 cm³/g, 0.015 cm³/g, 0.018 cm³/g, or 0.02 cm³/g. If the total volume of the pore structure in the hard carbon is excessively large, it easily increases the side reactions between the negative electrode material and the electrolyte, reducing first-cycle charge and discharge efficiency and cycle performance of the negative electrode plate. If the total volume of the pore structure in the hard carbon is excessively small, it may reduce the number of ion active sites in the negative electrode material, affecting the capacity of the negative electrode plate. In the present disclosure, controlling the total volume V of the pores in the hard carbon within the above range is favorable for balancing the energy density, the first-cycle charge and discharge efficiency, and the cycle performance of the battery. Further, the total volume V of the pores in the hard carbon may range from 0.008 cm³/g to 0.016 cm³/g, which thus can further ensure that the battery simultaneously has relatively high energy density and first-cycle charge and discharge efficiency, and excellent cycle performance. It should be noted that the total volume V of the pores in the hard carbon can be tested by a nitrogen adsorption-desorption method, in which an isothermal adsorption-desorption curve is acquired to obtain a total adsorption pore volume at a relative pressure P/P₀ of 0.99, which represents the total volume V of the pores in the hard carbon.

According to an embodiment of the present disclosure, an average pore size of the hard carbon may range from 3 nm to 10 nm, such as 3 nm, 5 nm, 7 nm, or 9 nm. If the average pore size of the hard carbon is excessively small, it affects ion transmission, reducing kinetic performance of the hard carbon, thereby affecting the rate performance of the battery. If the average pore size of the hard carbon is excessively large, it leads to enhanced metallic properties of deposited sodium, posing a short circuit risk to the battery. Moreover, the specific surface area of the material is reduced due to the excessively large pores, resulting in a reduction in a sodium storage capacity. In the present disclosure, controlling the average pore size of the pores in the hard carbon within the above range is favorable for balancing the energy density and the rate performance of the battery. It should be noted that the average pore size of the hard carbon can be tested by a nitrogen adsorption-desorption method, in which an isothermal adsorption-desorption curve is acquired to obtain an average adsorption pore size, which is the average pore size of the pores in the hard carbon.

In a second aspect of the present disclosure, the present disclosure provides a method for preparing the above negative electrode material. According to an embodiment of the present disclosure, referring to FIG. 1, the method includes the following steps:

### S100: mixing a hard carbon precursor with a pore-forming agent to obtain a dispersion of the hard carbon precursor

According to an embodiment of the present disclosure, mixing the hard carbon precursor with the pore-forming agent facilitates the introduction of a uniformly distributed porous structure into the hard carbon through decomposition of the pore-forming agent during subsequent carbonization treatment. According to some specific examples of the present disclosure, a mixing ratio of the hard carbon precursor to the pore-forming agent may be 1: (0.02 to 0.2), such as 1/0.05, 1/0.1, or 1/0.15. If the amount of the pore-forming agent is excessive, an excessive number of pores are formed, and a total volume of the pores is overly large, leading to enhanced metallic properties of deposited sodium, thereby posing a short circuit risk to the battery. If the amount of the pore-forming agent is insufficient, a small number of pores are formed, and a total volume of the pores is excessively small, which is not conducive to ion transmission, thereby reducing the kinetic properties of the hard carbon. It should be noted that the specific types of the hard carbon precursor and the pore-forming agent are not particularly limited in the present disclosure, and can be flexibly selected by those skilled in the art according to actual conditions. For example, the hard carbon precursor may include, but is not limited to, phenolic resin, biomass, etc., and the pore-forming agent may include, but is not limited to, an inorganic salt, such as at least one of sodium carbonate, sodium bicarbonate, potassium carbonate, potassium bicarbonate, or calcium bicarbonate.

### S200: drying the dispersion of the hard carbon precursor, performing a carbonization treatment on the dried dispersion of the hard carbon precursor, followed by washing, pulverizing, and sieving, to obtain the negative electrode material

According to an embodiment of the present disclosure, drying and then performing carbonization treatment on the dispersion of the hard carbon precursor allows the hard carbon precursor to be pyrolyzed to obtain the hard carbon. Meanwhile, the pore-forming agent is also pyrolyzed to form a porous structure inside the hard carbon. According to some specific examples of the present disclosure, the carbonization treatment can be carried out under a protective atmosphere. A temperature of the carbonization treatment may range from 900°C to 1100°C, such as 920°C, 960°C, 1000°C, or 1050°C. A heating rate may range from 0.5°C/min to 10°C/min, such as 1°C/min, 3°C/min, 5°C/min, 7°C/min or 8°C/min. Thus, it is conducive to obtaining the above porous structure matching the particle size of the hard carbon. It should be noted that the specific type of the protective atmosphere is not particularly limited in the present disclosure, and can be flexibly selected by those skilled in the art according to actual conditions. For example, carbonization treatment may be carried out under a nitrogen atmosphere and/or an inert atmosphere.

According to an embodiment of the present disclosure, the hard carbon material obtained after the carbonization treatment is sequentially subjected to washing, pulverizing, and sieving to achieve the matching between the particle size and the porous structure of the hard carbon material, such that the Dv50 of the hard carbon and the total volume V of the pores in the hard carbon satisfy 0.32≤Dv50/1000V≤2.40. As a result, the hard carbon achieves relatively high capacitance and first-cycle charge and discharge efficiency while having good kinetic performance, which is conducive to balancing the energy density, the rate performance, and the cycle performance of the battery.

In general, this method not only has a simple preparation process conducive to industrial production, but also can obtain a negative electrode material with a relatively high capacity and first-cycle charge and discharge efficiency as well as excellent kinetic performance.

In a third aspect of the present disclosure, the present disclosure provides a negative electrode plate. According to an embodiment of the present disclosure, the negative electrode plate includes a negative electrode active material layer. The negative electrode active material layer includes the above negative electrode material or the negative electrode material obtained by the above method. Therefore, the battery loaded with the negative electrode plate has excellent energy density, rate performance, and first-cycle charge and discharge efficiency.

According to an embodiment of the present disclosure, the negative electrode active material layer has a porosity that may range from 28% to 40%, such as 30%, 32%, 34%, 36%, or 38%. The porosity of the negative electrode active material layer affects infiltration and electrolyte retention capacity of the electrolyte in the negative electrode plate, thereby affecting ion transmission. Specifically, if the porosity of the negative electrode active material layer is excessively large, it leads to an intensification of side reactions during formation and cycling, affecting long cycle performance of the battery. If the porosity of the negative electrode active material layer is excessively small, it affects the infiltration effect of the electrolyte in the negative electrode plate, meanwhile decreases the electrolyte retention capacity, which easily increases ion transmission resistance, thereby affecting the cycle performance and the kinetic performance of the battery. In the present disclosure, controlling the porosity of the negative electrode active material layer within the above range is favorable for improving the infiltration effect of the electrolyte in the negative electrode plate and reducing transmission resistance of sodium ions, and thus is conducive to improving the cycle performance and the kinetic performance of the battery. It should be noted that the porosity of the negative electrode active material layer can be tested through mercury intrusion porosimetry, with specific reference to GB/T 21650.1-2008, "Determination of pore size distribution and porosity of solid materials by mercury intrusion porosimetry and gas adsorption - Part 1: Mercury intrusion porosimetry."

According to an embodiment of the present disclosure, the negative electrode active material layer may further include a binder and/or a conductive agent. In the negative electrode active material layer, an amount of the negative electrode material may range from 90 parts by weight to 98 parts by weight, such as 95.5 parts by weight. An amount of the binder may range from 0.5 parts by weight to 5 parts by weight, such as 1.5 parts by weight. An amount of the conductive agent may range from 1 part by weight to 5 parts by weight, such as 3 parts by weight. It should be noted that the specific types of the binder and the conductive agent are not particularly limited in the present disclosure, and can be flexibly selected by those skilled in the art according to actual conditions. For example, the binder may include at least one of styrene-butadiene rubber, polyvinylidene fluoride (PVDF), polytetrafluoroethylene, polyvinyl alcohol, polyacrylonitrile, polyacrylic acid, polyacrylate, carboxymethyl cellulose, or sodium alginate; and the conductive agent may include at least one of acetylene black, Super-P, carbon nanotube, carbon fiber, or graphene.

In a fourth aspect of the present disclosure, the present disclosure provides a method for preparing the above negative electrode plate. According to an embodiment of the present disclosure, the method includes: applying a negative electrode active slurry onto at least one side of a current collector to obtain the negative electrode plate. The negative electrode active slurry includes the above negative electrode material. This method not only has a simple preparation process conducive to industrial production, but also can obtain a negative electrode plate with a relatively high capacity and first-cycle charge and discharge efficiency as well as excellent kinetic performance. It should be noted that the specific type of current collector is not particularly limited in the present disclosure, and can be flexibly selected by those skilled in the art according to actual conditions. For example, the current collector may include at least one of a copper foil, a stainless steel foil, a copper alloy foil, a carbon-coated copper foil, an aluminum foil, or a carbon-coated aluminum foil.

In a fifth aspect of the present disclosure, the present disclosure provides an energy storage device. According to an embodiment of the present disclosure, the energy storage includes the above negative electrode plate. Compared with the related art, the energy storage device has good comprehensive performance and can balance a high energy density and good rate performance and cycle performance.

According to an embodiment of the present disclosure, the specific type of the energy storage device is not particularly limited in the present disclosure, and can be flexibly selected by those skilled in the art according to actual conditions. For example, the energy storage device may be a battery, and the battery may include a positive electrode plate, a separator, and an electrolyte. The positive electrode plate includes a positive electrode active material layer. The positive electrode active material layer may include a positive electrode active material, a binder, and a conductive agent. In the present disclosure, the specific types of the positive electrode active material, the binder, and the conductive agent in the positive electrode active material layer are not particularly limited in the present disclosure. For example, for sodium-ion batteries, the positive electrode active material may include at least one of a transition metal oxide, a polyanionic compound, an organic polymer, or a Prussian blue material. The specific composition of the separator is also not particularly limited in the present disclosure. For example, the separator may include at least one of polypropylene (PP), polyethylene (PE), or a ceramic separator. The electrolyte may include an electrolyte salt and an organic solvent. The specific types and compositions of the electrolyte salt and the organic solvent are also not particularly limited in the present disclosure, and can be selected by those skilled in the art according to actual needs.

In a sixth aspect of the present disclosure, the present disclosure provides an electricity-consumption device. According to an embodiment of the present disclosure, the electricity-consumption device includes the above energy storage device. Compared with the related art, the electricity-consumption device has a longer battery life and a longer battery service life, and thus has higher market satisfaction.

The embodiments of the present disclosure are described in detail below. It should be noted that the embodiments described below are exemplary only and intended to explain, rather than limit, the present disclosure. When the specific technology or conditions are not specified in the embodiments, they are carried out according to techniques or conditions described in the literature in the field or according to product manuals. Reagents and instruments used without specifying the manufacturer are all conventional and commercially available products.

### Example 1

(1) Coconut shell powder subjected to pretreatment was mixed with a potassium bicarbonate solution, at a mass ratio of 1:0.07 (coconut shell powder to potassium bicarbonate) to obtain a dispersion of a hard carbon precursor. The dispersion of the hard carbon precursor was placed in a vacuum oven and dried for 20 hours, and then subjected to carbonization treatment under nitrogen protection at a heating rate of 5°C/min up to 1100°C to obtain a carbonized product. The carbonized product was pulverized, sequentially washed with hydrochloric acid and deionized water, dried, sieved and demagnetized to obtain porous hard carbon. The porous hard carbon had a Dv50 of 15 µm, a pore size of 8.8 nm for individual pores in the porous hard carbon, a total volume of pores V of 0.007 cm³/g in the porous hard carbon, and Dv50/1000V of 2.14.
(2) The porous hard carbon, conductive carbon black, sodium hydroxymethyl cellulose, and styrene-butadiene rubber were mixed at a mass ratio of 95.5:1.5:1:2. The mixed powder was placed in a vacuum mixer and deionized water was added. The mixture was stirred to obtain a negative electrode active slurry. The negative electrode slurry was uniformly coated onto two opposite side surfaces of a negative electrode current collector to form a negative electrode active material layer. The negative electrode current collector coated with the negative electrode active slurry was transferred to an oven for drying, followed by calendering and slitting, to obtain a negative electrode plate. The negative electrode active material layer had a porosity of 32%.
(3) Na₃V₂(PO₄)₃, conductive agent Super-P, and binder PVDF were mixed at a mass ratio of 95:2.5:2.5. The mixed powder was placed in a vacuum mixer, and N-methylpyrrolidone was added. The mixture was stirred uniformly to obtain a positive electrode active slurry. The positive electrode active slurry was uniformly coated onto two opposite side surfaces of positive electrode current collector aluminum foil to form a positive electrode active material layer. The positive electrode current collector coated with the positive electrode slurry was transferred to an oven for drying, followed by calendering and slitting, to obtain a positive electrode plate.
(4) Ethylene carbonate (EC), ethyl methyl carbonate (EMC), and diethyl carbonate (DEC) were mixed at a volume ratio of 1:1:1 to obtain a mixed solvent. Dried sodium salt NaPF₆ was added to the mixed solvent to prepare an electrolyte with a concentration of 1 mol/L. 2 wt% of fluoroethylene carbonate (FEC) additive was further added to obtain an electrolyte.
(5) The above positive electrode plate, the negative electrode plate, and a polypropylene separator were stacked in sequence, with the separator placed between the positive and negative electrode plates, and then wound to obtain a bare cell. The bare cell was placed in an aluminum-plastic film laminated pouch, dried, and then injected with the electrolyte, followed by processes such as vacuum sealing, standing, formation, and shaping, to obtain a secondary battery.

### Example 2

The difference from Example 1 lies in step (1): Coconut shell powder subjected to pretreatment was mixed with a potassium bicarbonate solution at a mass ratio of 1:0.09 (coconut shell powder to potassium bicarbonate) to obtain a dispersion of a hard carbon precursor. The dispersion of the hard carbon precursor was placed in a vacuum oven and dried for 20 hours, and then subjected to carbonization treatment under nitrogen protection at a heating rate of 4°C/min up to 1100°C to obtain a carbonized product. The carbonized product was pulverized, sequentially washed with hydrochloric acid and deionized water, dried, sieved and demagnetized to obtain porous hard carbon. The porous hard carbon had a Dv50 of 7 µm, a pore size of 7.3 nm for individual pores in the porous hard carbon, a total volume of pores V of 0.010 cm³/g in the porous hard carbon, and Dv50/1000V of 0.7.

### Example 3

The difference from Example 1 lies in step (1): Coconut shell powder subjected to pretreatment was mixed with a potassium bicarbonate solution at a mass ratio of 1:0.15 (coconut shell powder to potassium bicarbonate) to obtain a dispersion of a hard carbon precursor. The dispersion of the hard carbon precursor was placed in a vacuum oven and dried for 20 hours, and then subjected to carbonization treatment under nitrogen protection at a heating rate of 2°C/min up to 1100°C to obtain a carbonized product. The carbonized product was pulverized, sequentially washed with hydrochloric acid and deionized water, dried, sieved and demagnetized to obtain porous hard carbon. The porous hard carbon had a Dv50 of 7 µm, a pore size of 3.8 nm for individual pores in the porous hard carbon, a total volume of pores V of 0.022 cm³/g in the porous hard carbon, and Dv50/1000V of 0.32.

### Example 4

The difference from Example 1 lies in step (1): Coconut shell powder subjected to pretreatment was mixed with a potassium bicarbonate solution at a mass ratio of 1:0.10 (coconut shell powder to potassium bicarbonate) to obtain a dispersion of a hard carbon precursor. The dispersion of the hard carbon precursor was placed in a vacuum oven and dried for 20 hours, and then subjected to carbonization treatment under nitrogen protection at a heating rate of 3°C/min up to 1100°C to obtain a carbonized product. The carbonized product was pulverized, sequentially washed with hydrochloric acid and deionized water, dried, sieved and demagnetized to obtain porous hard carbon. The porous hard carbon had a Dv50 of 5 µm, a pore size of 6.4 nm for individual pores in the porous hard carbon, a total volume of pores V of 0.012 cm³/g in the porous hard carbon, and Dv50/1000V of 0.42.

### Example 5

The difference from Example 1 lies in step (1): Coconut shell powder subjected to pretreatment was mixed with a potassium bicarbonate solution at a mass ratio of 1:0.08 (coconut shell powder to potassium bicarbonate) to obtain a dispersion of a hard carbon precursor. The dispersion of the hard carbon precursor was placed in a vacuum oven and dried for 20 hours, and then subjected to carbonization treatment under nitrogen protection at a heating rate of 4°C/min up to 1100°C to obtain a carbonized product. The carbonized product was pulverized, sequentially washed with hydrochloric acid and deionized water, dried, sieved and demagnetized to obtain porous hard carbon. The porous hard carbon had a Dv50 of 9 µm, a pore size of 7.6 nm for individual pores in the porous hard carbon, a total volume of pores V of 0.009 cm³/g in the porous hard carbon, and Dv50/1000V of 1.0.

### Example 6

The difference from Example 1 lies in step (1): Coconut shell powder subjected to pretreatment was mixed with a potassium bicarbonate solution at a mass ratio of 1:0.08 (coconut shell powder to potassium bicarbonate) to obtain a dispersion of a hard carbon precursor. The dispersion of the hard carbon precursor was placed in a vacuum oven and dried for 20 hours, and then subjected to carbonization treatment under nitrogen protection at a heating rate of 5°C/min up to 1100°C to obtain a carbonized product. The carbonized product was pulverized, sequentially washed with hydrochloric acid and deionized water, dried, sieved and demagnetized to obtain porous hard carbon. The porous hard carbon had a Dv50 of 13 µm, a pore size of 8.1 nm for individual pores in the porous hard carbon, a total volume of pores V of 0.009 cm³/g in the porous hard carbon, and Dv50/1000V of 1.44.

### Example 7

The difference from Example 1 lies in step (1): Coconut shell powder subjected to pretreatment was mixed with a potassium bicarbonate solution at a mass ratio of 1:0.06 (coconut shell powder to potassium bicarbonate) to obtain a dispersion of a hard carbon precursor. The dispersion of the hard carbon precursor was placed in a vacuum oven and dried for 20 hours, and then subjected to carbonization treatment under nitrogen protection at a heating rate of 5°C/min up to 1100°C to obtain a carbonized product. The carbonized product was pulverized, sequentially washed with hydrochloric acid and deionized water, dried, sieved and demagnetized to obtain porous hard carbon. The porous hard carbon had a Dv50 of 14 µm, a pore size of 8.3 nm for individual pores in the porous hard carbon, a total volume of pores V of 0.006 cm³/g in the porous hard carbon, and Dv50/1000V of 2.33.

### Comparative Example 1

The difference from Example 1 lies in step (2): Commercially available hard carbon was used as the negative electrode active material, and the hard carbon had a Dv50 of 8 µm.

### Comparative Example 2

The difference from Example 1 lies in step (1): Coconut shell powder subjected to pretreatment was mixed with a potassium bicarbonate solution at a mass ratio of 1:0.24 (coconut shell powder to potassium bicarbonate) to obtain a dispersion of a hard carbon precursor. The dispersion of the hard carbon precursor was placed in a vacuum oven and dried for 20 hours, and then subjected to carbonization treatment under nitrogen protection at a heating rate of 2°C/min up to 1100°C to obtain a carbonized product. The carbonized product was pulverized, sequentially washed with hydrochloric acid and deionized water, dried, sieved and demagnetized to obtain porous hard carbon. The porous hard carbon had a Dv50 of 6 µm, a pore size of 3.2 nm for individual pores in the porous hard carbon, a total volume of pores V of 0.021 cm³/g in the porous hard carbon, and Dv50/1000V of 0.29.

### Comparative Example 3

The difference from Example 1 lies in step (1): Coconut shell powder subjected to pretreatment was mixed with a potassium bicarbonate solution at a mass ratio of 1:0.05 (coconut shell powder to potassium bicarbonate) to obtain a dispersion of a hard carbon precursor. The dispersion of the hard carbon precursor was placed in a vacuum oven and dried for 20 hours, and then subjected to carbonization treatment under nitrogen protection at a heating rate of 5°C/min up to 1100°C to obtain a carbonized product. The carbonized product was pulverized, sequentially washed with hydrochloric acid and deionized water, dried, sieved and demagnetized to obtain porous hard carbon. The porous hard carbon had a Dv50 of 16 µm, a pore size of 9.2 nm for individual pores in the porous hard carbon, a total volume of pores V of 0.006 cm³/g in the porous hard carbon, and Dv50/1000V of 2.67.

### Comparative Example 4

The difference from Example 1 lies in step (1): Coconut shell powder subjected to pretreatment was mixed with a potassium bicarbonate solution at a mass ratio of 1:0.16 (coconut shell powder to potassium bicarbonate) to obtain a dispersion of a hard carbon precursor. The dispersion of the hard carbon precursor was placed in a vacuum oven and dried for 20 hours, and then subjected to carbonization treatment under nitrogen protection at a heating rate of 3°C/min up to 1100°C to obtain a carbonized product. The carbonized product was pulverized, sequentially washed with hydrochloric acid and deionized water, dried, sieved and demagnetized to obtain porous hard carbon. The porous hard carbon had a Dv50 of 4 µm, a pore size of 4.5 nm for individual pores in the porous hard carbon, a total volume of pores V of 0.016 cm³/g in the porous hard carbon, and Dv50/1000V of 0.25.

### Comparative Example 5

The difference from Example 1 lies in step (1): Coconut shell powder subjected to pretreatment was mixed with a potassium bicarbonate solution at a mass ratio of 1:0.09 (coconut shell powder to potassium bicarbonate) to obtain a dispersion of a hard carbon precursor. The dispersion of the hard carbon precursor was placed in a vacuum oven and dried for 20 hours, and then subjected to carbonization treatment under nitrogen protection at a heating rate of 5°C/min up to 1100°C to obtain a carbonized product. The carbonized product was pulverized, sequentially washed with hydrochloric acid and deionized water, dried, sieved and demagnetized to obtain porous hard carbon. The porous hard carbon had a Dv50 of 20 µm, a pore size of 8.3 nm for individual pores in the porous hard carbon, a total volume of pores V of 0.007 cm³/g in the porous hard carbon, and Dv50/1000V of 2.86.

### Comparative Example 6

The difference from Example 1 lies in step (1): Coconut shell powder subjected to pretreatment was mixed with a potassium bicarbonate solution at a mass ratio of 1:0.30 (coconut shell powder to potassium bicarbonate) to obtain a dispersion of a hard carbon precursor. The dispersion of the hard carbon precursor was placed in a vacuum oven and dried for 20 hours, and then subjected to carbonization treatment under nitrogen protection at a heating rate of 2°C/min up to 1100°C to obtain a carbonized product. The carbonized product was pulverized, sequentially washed with hydrochloric acid and deionized water, dried, sieved and demagnetized to obtain porous hard carbon. The porous hard carbon had a Dv50 of 7 µm, a pore size of 2.4 nm for individual pores in the porous hard carbon, a total volume of pores V of 0.027 cm³/g in the porous hard carbon, and Dv50/1000V of 0.26.

### Comparative Example 7

The difference from Example 1 lies in step (1): Coconut shell powder subjected to pretreatment was mixed with a potassium bicarbonate solution at a mass ratio of 1:0.03 (coconut shell powder to potassium bicarbonate) to obtain a dispersion of a hard carbon precursor. The dispersion of the hard carbon precursor was placed in a vacuum oven and dried for 20 hours, and then subjected to carbonization treatment under nitrogen protection at a heating rate of 6°C/min up to 1100°C to obtain a carbonized product. The carbonized product was pulverized, sequentially washed with hydrochloric acid and deionized water, dried, sieved and demagnetized to obtain porous hard carbon. The porous hard carbon had a Dv50 of 15 µm, a pore size of 11.7 nm for individual pores in the porous hard carbon, a total volume of pores V of 0.004 cm³/g in the porous hard carbon, and Dv50/1000V of 3.75.

The differences between Examples 1 to 7 and Comparative Examples 1 to 7 are shown in Table 1.

**Table 1: Experimental parameters of Examples 1 to 7 and Comparative Examples 1 to 7**

| | Hard carbon materials | | | |
|---|---|---|---|---|
| | Pore size for individual pores (nm) | Dv50 (µm) | V (cm³/g) | Dv50/1000V |
| Example 1 | 8.8 | 15 | 0.007 | 2.14 |
| Example 2 | 7.3 | 7 | 0.010 | 0.70 |
| Example 3 | 3.8 | 7 | 0.022 | 0.32 |
| Example 4 | 6.4 | 5 | 0.012 | 0.42 |
| Example 5 | 7.6 | 9 | 0.009 | 1.00 |
| Example 6 | 8.1 | 13 | 0.009 | 1.44 |
| Example 7 | 8.3 | 14 | 0.006 | 2.33 |
| Comparative Example 1 | / | 8 | / | / |
| Comparative Example 2 | 3.2 | 6 | 0.021 | 0.29 |
| Comparative Example 3 | 9.2 | 16 | 0.006 | 2.67 |
| Comparative Example 4 | 4.5 | 4 | 0.016 | 0.25 |
| Comparative Example 5 | 8.3 | 20 | 0.007 | 2.86 |
| Comparative Example 6 | 2.4 | 7 | 0.027 | 0.26 |
| Comparative Example 7 | 11.7 | 15 | 0.004 | 3.75 |

### Testing and Analysis

Under the same conditions, the batteries prepared in Examples 1 to 7 and Comparative Examples 1 to 7 were tested for energy density, cycle performance, and kinetic performance. The specific testing methods are as follows.

Energy density: The batteries were weighed using an electronic balance at 25°C. The batteries were charged and discharged at a rate of 1.5C at 25°C, and actual discharge energy was recorded. The ratio of the actual discharge energy of the battery to the battery weight was the energy density of the battery.

Cycle performance: The batteries were charged at a rate of 2C and discharged at a rate of 1C for a full charge and discharge cycle test. The capacity retention rate of the batteries after 1,000 cycles was recorded to characterize the cycle performance of the batteries.

Dynamic performance: At 25°C, the batteries were fully charged at nC and fully discharged at 1C. After repeating the charge and discharge cycle 10 times, the batteries were charged to a full charge state at a rate of nC (n>0). Then, the negative electrodes were disassembled, and sodium precipitation on surfaces of the negative electrode was observed. If the area of sodium precipitation on the surfaces of the negative electrode plates was less than 2%, it was considered as no sodium precipitation. A sodium precipitation rate means that if no sodium precipitation occurred on the surfaces of the negative electrode plates, the charging rate was increased from nC in an increment of 0.1C and tested again until sodium was precipitated on the surfaces of the negative electrode plates. At this point, the charging rate nC minus 0.1C was the maximum charging rate of the battery under the condition of no sodium precipitation.

The test results are shown in Table 2.

**Table 2: Test results of Examples 1 to 7 and Comparative Examples 1 to 7**

| Group | Energy density (Wh/kg) | Capacity retention rate after 1000 cycles (%) | First-cycle charge and discharge efficiency (%) | Sodium precipitation rate (C) |
|---|---|---|---|---|
| Example 1 | 103 | 89.3 | 89.2 | 2.1 |
| Example 2 | 109 | 93.1 | 91.8 | 2.8 |
| Example 3 | 101 | 89.8 | 87.4 | 2.3 |
| Example 4 | 108 | 92.6 | 90.9 | 2.9 |
| Example 5 | 106 | 91.7 | 91.2 | 2.6 |
| Example 6 | 104 | 90.6 | 90.1 | 2.3 |
| Example 7 | 102 | 88.5 | 88.8 | 2.0 |
| Comparative Example 1 | 94 | 79.5 | 83.1 | 1.5 |
| Comparative Example 2 | 101 | 84.6 | 85.1 | 2.2 |
| Comparative Example 3 | 95 | 80.3 | 83.4 | 1.5 |
| Comparative Example 4 | 99 | 84.1 | 86.4 | 2.0 |
| Comparative Example 5 | 89 | 72.1 | 77.5 | 1.3 |
| Comparative Example 6 | 92 | 74.5 | 78.8 | 1.3 |
| Comparative Example 7 | 100 | 77.4 | 82.6 | 1.8 |

### Results and Discussion

Tables 1 and 2 reveal that, compared with Comparative Examples 1 to 7, the sodium-ion batteries prepared in Examples 1 to 7 of the present disclosure had higher first-cycle charge and discharge efficiency and energy density as well as better rate performance and cycle performance. These results indicate that by adopting the porous hard carbon of the above embodiments of the present disclosure and by controlling the ratio of the particle size of the hard carbon particles to the total volume of the pores in the hard carbon within the above range, the matching between the particle size and the porous structure of the hard carbon material can be realized. Thus, the porous hard carbon has a higher capacity and first-cycle charge and discharge efficiency while exhibiting better kinetic performance, thereby balancing the energy density, the rate performance, and the cycle performance of the battery.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. The appearances of the above phrases in various places throughout this specification are not necessarily referring to the same embodiment or example of the present disclosure. Furthermore, the particular features, structures, materials, or characteristics may be combined in any suitable manner in one or more embodiments or examples. In addition, different embodiments or examples and features of different embodiments or examples described in the specification may be combined by those skilled in the art, unless they are contradictory to each other.

Although embodiments of the present disclosure have been shown and described, it would be appreciated by those skilled in the art that the above embodiments cannot be construed to limiting the present disclosure, and changes, modifications, alternatives, and alterations can be made in the embodiments without departing from scope of the present disclosure.

## Claims

1. A negative electrode material, comprising hard carbon, wherein the hard carbon has a porous structure and satisfies: 0.32≤Dv50/1000V≤2.40, wherein:
Dv50 of the hard carbon is in unit of µm; and
V represents a total volume of pores in the hard carbon, in unit of cm³/g.

2. The negative electrode material according to claim 1, wherein the hard carbon satisfies: 0.42≤Dv50/1000V≤1.44.

3. The negative electrode material according to claim 1 or 2, satisfying at least one of the following conditions:
the Dv50 of the hard carbon ranges from 5 µm to 18 µm;
the total volume V of the pores in the hard carbon ranges from 0.005 cm³/g to 0.022 cm³/g; or
an average pore size of the pores in the hard carbon ranges from 3 nm to 10 nm.

4. The negative electrode material according to any one of claims 1 to 3, satisfying at least one of the following conditions:
the Dv50 of the hard carbon ranges from 5 µm to 14 µm; or
the total volume V of the pores in the hard carbon ranges from 0.008 cm³/g to 0.016 cm³/g.

5. A negative electrode plate, comprising a negative electrode active material layer, the negative electrode active material layer comprising the negative electrode material according to any one of claims 1 to 4.

6. The negative electrode plate according to claim 5, wherein the negative electrode active material layer has a porosity ranging from 28% to 40%.

7. The negative electrode plate according to claim 5 or 6, wherein the negative electrode active material layer further comprises: a binder and/or a conductive agent, in the negative electrode active material layer:
an amount of the negative electrode material ranges from 90 parts by weight to 98 parts by weight;
an amount of the binder ranges from 0.5 parts by weight to 5 parts by weight; and
an amount of the conductive agent ranges from 1 part by weight to 5 parts by weight.

8. A method for preparing the negative electrode material according to any one of claims 1 to 4, the method comprising:
step 1: mixing a hard carbon precursor with a pore-forming agent to obtain a dispersion of the hard carbon precursor;
step 2: drying the dispersion of the hard carbon precursor, performing a carbonization treatment on the dried dispersion of the hard carbon precursor, followed by washing, pulverizing, and sieving, to obtain the negative electrode material.

9. The method according to claim 8, wherein in step 1, a mass ratio of the hard carbon precursor to the pore-forming agent is 1:(0.02 to 0.3).

10. A method for preparing the negative electrode plate according to any one of claims 5 to 7, the method comprising:
applying a negative electrode active slurry onto at least one side of a current collector to obtain the negative electrode plate, the negative electrode active slurry comprising the negative electrode material according to any one of claims 1 to 4 or the negative electrode material obtained by the method according to claim 8 or 9.

11. An energy storage device, comprising the negative electrode plate according to any one of claims 5 to 7.

12. An electricity-consumption device, comprising the energy storage device according to claim 11.
